## Europäisches Patentamt
## European Patent Office
## Office européen des brevets

(19)

(11) Veröffentlichungsnummer : **0 069 752**
**B1**

(12) **EUROPÄISCHE PATENTSCHRIFT**

(45) Veröffentlichungstag der Patentschrift :
23.05.84

(21) Anmeldenummer : 82900303.7

(22) Anmeldetag : 21.01.82

(86) Internationale Anmeldenummer :
PCT/DE 82/00013

(87) Internationale Veröffentlichungsnummer :
WO WO/82025 (05.08.82 Gazettee 82/19)

(51) Int. Cl.³ : **F 23 G  5/02**

(54) **VERFAHREN ZUR THERMISCHEN MÜLLVERWERTUNG UND ANLAGE ZUR DURCHFÜHRUNG DES VERFAHRENS.**

(30) Priorität : 22.01.81 DE 3101961

(43) Veröffentlichungstag der Anmeldung :
19.01.83 Patentblatt 83/03

(45) Bekanntmachung des Hinweises auf die Patenterteilung : 23.05.84 Patentblatt 84/21

(84) Benannte Vertragsstaaten :
AT BE CH DE FR GB LI LU NL SE

(56) Entgegenhaltungen :
WO-A-80 /017 13
DE-A- 2 327 709
FR-A- 2 197 148
FR-A- 2 369 505

(73) Patentinhaber : MANNESMANN VEBA UMWELT-
TECHNIK GMBH
Südstrasse 41
D-4690 Herne 2 (DE)

(72) Erfinder : RIEMANN, Hanns-Helmut
Schattbachstrasse 26
D-4630 Bochum (DE)
Erfinder : BRACKER, Gerd-Peter
Weidengrund 18
D-4630 Bochum (DE)

(74) Vertreter : Meissner, Peter E., Dipl.-Ing. et al
Patentanwälte Dipl.-Ing. Peter E. Meissner Dipl.-Ing.
Hans-Joachim Presting Herbertstrasse 22
D-1000 Berlin 33 (DE)

EP 0 069 752 B1

## Beschreibung

Die Erfindung betrifft ein Verfahren für den thermischen Teil der Müllverwertung durch Verbrennung und Pyrolyse des Mülls sowie den für die Durchführung des Verfahrens geeigneten Teil einer Müllverwertungsanlage. Bei derartigen Verfahren ist es bekannt, die in ein und derselben Müllverwertungsanlage vorhandenen Einrichtungen, nämlich die Verbrennungsanlage und die Pyrolyseanlage völlig getrennt anzuordnen und zu betreiben. Die Stützbrenner der Verbrennungsanlage, die mit Öl oder Erdgas befeuert werden und als Gruppenaggregate reglergesteuert zuschaltbar sind, besorgen den Start der Verbrennungsanlage und sind während des stationären Betriebes der Anlage nur soweit in Betrieb, wie es die momentane Brennfähigkeit des Mülls zur Aufrechterhaltung einer möglichst konstanten Verbrennungstemperatur erfordert. Anderenteils wird die Pyrolyseanlage mit dem nach Entzug der wiederverwertbaren großmolekularen Bestandteile übrigbleibenden Pyrolysereingas beheizt.

Ferner ist ein Verfahren zur thermischen Müllverwertung durch Pyrolyse und Verbrennung bekannt, bei dem die Pyrolysegase unbehandelt in einem mit Pyrolysekoks beschickten Brenngasreaktor geführt, darin gecrackt und als Gemisch mit dem Reaktorgas etwa in einem Gasmotor verbrannt werden. Die Pyrolysetrommel wird mit den Abgasen des Gasmotors beheizt. Die Einrichtung ist eine Abwandlung etwa des Holzgenerators, um als Brennstoff Müll zu verwenden und um die Schwelgase in eine für den Motorbetrieb geeignetere Zusammensetzung umzuwandeln.

Aus der DE-A-27 48 510 sind ein Verfahren und eine Anlage zur Verwertung der bei der Pyrolyse und Teilverbrennung von Abfallstoffen anfallenden Gase bekannt, wobei diese Gase gemeinsam mit herkömmlichen Brennstoffen zur Beheizung eines Brennraumes zum Erhitzen bzw. Brennen von Ausgangsstoffen für Baustoffe verwendet werden. Das Rauchgas dieser Brennanlage kann zum Vorheizen des Pyrolysegutes und zur direkten Heizung des Pyrolyseraumes eingesetzt werden. Durch die direkte Beheizung fallen die Pyrolysegase stark verdünnt an, was ihre Reinigung und die Gewinnung der großmolekularen Bestandteile erheblich erschwert bzw. nur unter erhöhtem Energieaufwand zuläßt. Wegen des hohen Gehaltes des Pyrolysegases an unbrennbaren Bestandteilen wie Stickstoff und Kohlendioxid lassen sich bei der Verbrennung nur ungenügend hohe Temperaturen im Brennraum erzielen, so daß dieser im wesentlichen durch die Verbrennung konventioneller Brennstoffe wie Kohlenstaub, Heizöl oder Erdgas beheizt werden muß. Auch kann bei diesem Verfahren nur ein Teil der Rauchgase der Brennanlage für die Beheizung der Pyrolyse eingesetzt werden ; der Wärmeinhalt des restlichen Teiles bleibt ungenutzt.

Die Erfindung bezweckt, die Müllverwertung energetisch günstiger zu betreiben, insbesondere so, daß für die Stützbrenner kein oder nur eine geringe Menge Öl oder Erdgas benötigt wird. Diese Aufgabe wird dadurch gelöst, daß die die Verbrennung des Mülls stützende Zusatzheizung zumindest teilweise durch Verbrennung des in der Pyrolyse anfallenden Reingases erfolgt und die für die Pyrolyse anfallenden Reingases erfolgt und die für die Pyrolyse notwendige Wärme vom Rauchgas der Verbrennung durch indirekte Beheizung des Pyrolysereaktors geliefert wird. Die Erfindung beruht auf der Erkenntnis, daß die Rauchgastemperaturen einer Müllverbrennungskammer für die indirekte Beheizung der Pyrolyse ausreichend hoch sind und die Verbrennung von Pyrolysereingas für einen Stützbrenner ausreichende Temperaturen ergibt.

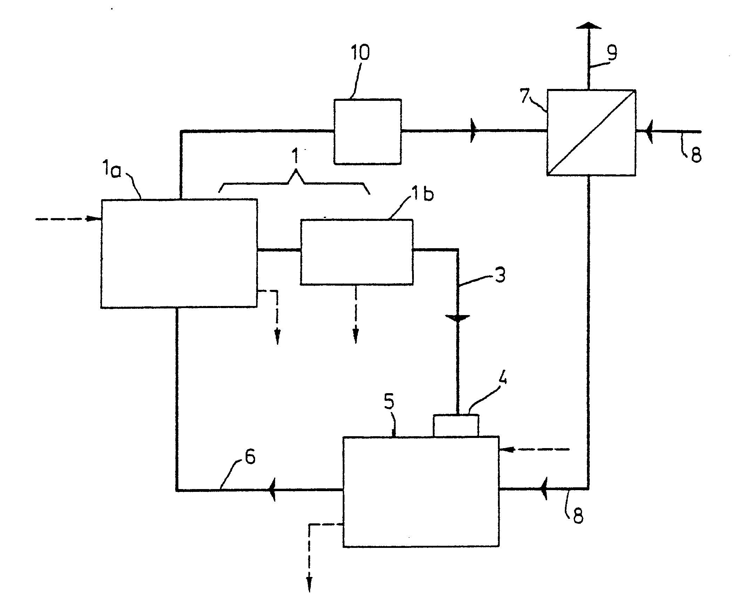

In der Zeichnung ist der thermische Teil einer Müllverwertungsanlage an einem Anordnungsschema als Beispiel dargestellt.

Die Müllverwertungsanlage nach der Zeichnung besteht aus einer Pyrolyseanlage 1 mit einem etwa als drehbare Trommel ausgebildeten Pyrolysereaktor 1a und einer sich aus Kondensator und Gaswäschereinheiten zusammensetzenden Einrichtung 1b, wobei aus dieser Einrichtung sogenanntes Pyrolysereingas austritt. Der Reingasaustritt 3 ist mit einem Stützbrenner 4 einer Verbrennungsanlage 5 verbunden. Zwischen dem Rauchgasaustritt 6 der Verbrennungsanlage 5 und dem Nachschaltvorwärmer 7 liegt der Pyrolysereaktor 1a und ein Abhitzkessel 10. In dem Nachschaltvorwärmer 7 wird die Verbrennungsluft 8 durch die Rauchgase erwärmt, die durch den Schornstein 9 abziehen.

Die Pfeilrichtungen beziehen sich auf die gasförmigen Medien ; die gestrichelt gezeichneten Pfeile bezeichnen die Flüssigkeits- bzw. Feststoffströme einmal der Pyrolyseanlage 1 zum anderen der Verbrennungsanlage 5.

Die etwa 1 200 °C heißen Rauchgase der Flammenkammer der Verbrennungsanlage 5 werden über den Kanal 6 dem Pyrolysereaktor 1a zugeführt, bei der besagten Trommelausführung desselben etwa zuerst einer innen angeordneten Strahlungsheizfläche und dann außen dem Trommelmantel. Das Pyrolysegut wird hierdurch indirekt auf die in der Größenordnung von 500-700 °C liegende Prozeßtemperatur aufgeheizt. Die aus dem Pyrolysereaktor austretenden Rauchgase werden in dem Abhitzkessel 10 und Nachschaltvorwärmer 7 auf Schornsteintemperatur abgekühlt.

Das gezeichnete und baulich einfachste Anordnungsschema gilt für den Idealfall des ausgeglichenen Energiehaushaltes, bei dem die anfallende Menge an Pyrolysereingas genau dem Stützwärmebedarf der Verbrennungsanlage 5 entspricht. Je nach Art des in einem bestimmten Zeitpunkt zur Verbrennung kommenden Mülls kann dieser Müll ausreichend exotherm sein, so daß ein Überschuß an Pyrolysereingas besteht.

Demgemäß sollte an dem Kanal 3 ein nicht gezeichneter Gasspeicherbehälter vorhanden sein, der mengenmäßig zumindest für die Start- und Spitzenauspufferung bemessen ist. Für den Fall der Verbrennung endothermer Abfallschlämme kann der Stützbrenner 4 ein Brenner einer Gruppe sein, deren übrige Brenner reglergesteuert mit Öl oder Gas betrieben werden.

Bei der Müllverwertung kann es andererseits vorkommen, daß die Pyrolyseanlage oder die Verbrennungsanlage zeitweise stillstehen. Die beiden Anlagenkomponenten sind daher so gestaltet, daß sie in herkömmlicher Weise auch getrennt betreibbar sind.

## Ansprüche

1. Verfahren zur thermischen Müllverwertung durch Verbrennung und Pyrolyse, dadurch gekennzeichnet, daß die Reingase der Pyrolyse zur stützenden Beheizung der Verbrennung und die Rauchgase der Verbrennung zur indirekten Beheizung der Pyrolyse verwendet werden.

2. Müllverwertungsanlage mit einer Pyrolyseanlage und einer mit einem Stützbrenner versehenen Verbrennungsanlage, dadurch gekennzeichnet, daß der Reingasaustritt (3) der Pyrolyseanlage (1) mit dem Stützbrenner (4) der Verbrennungsanlage (5) verbunden ist, und daß der Pyrolysereaktor (1a) zwischen dem Rauchgasaustritt (6) der Verbrennungsanlage und einem Abhitzekessel (10) oder dergleichen angeordnet ist.

3. Müllverwertungsanlage nach Anspruch 2, dadurch gekennzeichnet, daß in der Verbindung zwischen Reingasaustritt (3) und dem Stützbrenner (4) ein Speicherbehälter für das Reingas angeordnet ist.

## Claims

1. A method for the thermal exploitation of refuse by combustion and pyrolysis, wherein the pure pyrolysis gases are used for supplemental heating in combustion and the flue gases from combustion are used for indirect heating in pyrolysis.

2. A refuse processing installation with a pyrolysis unit and a combustion unit provided with an auxiliary burner, wherein the pure gas outlet (3) of the pyrolysis unit (1) is connected to the auxiliary burner (4) of the combustion unit (5), and the pyrolysis reactor (1a) is arranged between the flue gas outlet (6) of the combustion unit and a waste heat retrieval unit (10) or the like.

3. A refuse processing installation according to Claim 2, wherein a storage container for the pure gas is arranged in connection between the pure gas outlet (3) and the auxiliary burner (4).

## Revendications

1. Procédé pour l'exploitation thermique des ordures par combustion et pyrolyse, caractérisé en ce que les gaz purs de la pyrolyse sont utilisés pour le chauffage auxiliaire de la combustion, et les fumées de la combustion, pour le chauffage indirect de la pyrolyse.

2. Installation pour l'exploitation des ordures comportant une installation de pyrolyse et une installation de combustion pourvue d'un brûleur auxiliaire, caractérisée en ce que la sortie (3) du gaz pur de l'installation de pyrolyse (1) est reliée avec le brûleur auxiliaire (4) de l'installation de combustion (5), et que le réacteur de pyrolyse (1a) est placé entre la sortie (6) de la fumée de l'installation de combustion (5) et une chaudière (10) ou autre organe de récupération.

3. Installation pour l'exploitation des ordures suivant la revendication 2, caractérisée en ce qu'il est disposé un réservoir accumulateur de gaz pur sur la conduite qui relie la sortie du gaz pur (3) et le brûleur auxiliaire (4).